# EUROPEAN PATENT APPLICATION

(11) **EP 1 837 117 A1**
(43) Date of publication of application: **26.09.2007**
(21) Application number: 07103976.2
(22) Date of filing: 13.03.2007
(51) Int. Cl.: B23K 31/02, B23K 35/30

(54) **Buttered welding of superalloys**

(30) Priority: 24.03.2006 US 389614
(71) Applicant: General Electric Company, Schenectady, NY 12345 (US)
(72) Inventor: Arnett, Michael Douglas, Simpsonville, SC 29681 (US); Nowak, Daniel Anthony, Greenville, SC 29607 (US)
(74) Representative: Szary, Anne Catherine

(57) **Abstract**

Disclosed herein is a method of welding superalloy articles. A buttered layer (14) is attached to a first article (10) formed from a superalloy (12). A buttered layer (14) is attached to a second article (10) formed from a superalloy (12). Residual stresses are relieved between the buttered layer and the superalloy. Matching faying surfaces (16) are established at the buttered layers of the articles. And, the faying surfaces of the articles are welded together to form a welded assembly, wherein after welding, a heat affected zone (20) is within the buttered layers.

## Description

### BACKGROUND OF THE INVENTION

This application relates generally to welding methods for superalloys. Superalloy materials are generally used in applications that require good strength, creep resistance, fracture toughness, and other mechanical properties at elevated temperatures for extended periods of time. Nickel base superalloys, (such as gamma prime (γ') strengthened superalloys) are alloys containing about 50% or more by weight of nickel, plus alloying elements that are added to improve the mechanical and physical properties of these alloys.

Superalloys, and in particular gamma prime strengthened nickel base superalloys, are highly susceptible to cracking when welded. Weld cracking is due, at least in part, to the residual stresses produced during the welding and aging cycles. Cracking is particularly likely when welding articles formed of gamma prime strengthened nickel base superalloys, which contain amounts of other elements including aluminum and titanium, for example. Aluminum and titanium are the primary elements forming the gamma prime phase that increases the strength, but also reduces the ductility, of nickel base superalloys. The cracking problem becomes more severe when welds are required to fuse thick sections of material, or when the weld geometry causes the weld shrinkage stresses to interact.

Previously, the cracking problem has been addressed by brazing, by welding using a filler shim piece within the weld joint, or by forming a thin cladding layer within the weld joint. Brazing is not always an option due to tolerance requirements, shim welding may not be ductile enough to overcome geometrical stress interactions, and the thin cladding layer may not prevent stresses from affecting the superalloy base material and the heat affected zone (HAZ).

Accordingly, in view of the shortcomings noted, there is a need for an alternative process for welding superalloys.

### BRIEF SUMMARY OF THE INVENTION

Disclosed herein is a method of welding superalloy articles. A buttered layer is attached to a first article formed from a superalloy. A buttered layer is attached to a second article formed from a superalloy. Residual stresses are relieved between the buttered layer and the superalloy. Matching faying surfaces are established at the buttered layers of the articles. And, the faying surfaces of the articles are welded together to form a welded assembly, wherein after welding, a heat affected zone is within the buttered layers.

Further disclosed herein is a method of welding superalloy articles. A buttered layer is attached to a first article formed from a superalloy. A buttered layer is attached to a second article formed from a superalloy. Residual stresses are relieved between the buttered layer and the superalloy. Matching faying surfaces are established at the buttered layers of the articles. And, the faying surfaces of the articles are welded together to form a welded assembly, wherein after welding, the superalloy is free of induced stresses.

Yet further disclosed herein is a method of welding superalloy articles. A buttered layer is attached to a first article formed from a superalloy. A buttered layer is attached to a second article formed from a superalloy. Residual stresses are relieved between the buttered layer and the superalloy. Matching faying surfaces are established at the buttered layers. And, the faying surfaces of the articles are welded together to form a welded assembly, wherein after welding, the buttered layers have a thickness greater than a weld zone and a heat affected zone resulting from the welding.

The method further includes the aspects of attaching of the buttered layer to the superalloy further comprises attaching the buttered layer to a nickel base superalloy; or attaching the buttered layer to a gamma prime strengthened nickel base superalloy; or attaching the buttered layer to a gamma prime strengthened nickel base superalloy containing aluminum and/or titanium.

The method further includes the aspects of machining of the buttered layers further comprises machining the buttered layers to dimensions capable of surrounding the heat affected zone; and cooling the welded assembly, wherein after cooling, the welded assembly is essentially free of cracks; and relieving of the residual stresses further comprises performing a heat-treat operation on each of the articles; and establishing of the faying surfaces further includes performing a machining operation on the buttered layers of the articles.

### BRIEF DESCRIPTION OF THE DRAWINGS

Referring to the drawings wherein like elements are numbered alike in the several Figures:
FIGURE 1 is a schematic cross sectional view of superalloy articles with thick buttered layers to be welded;
FIGURE 2 is a schematic cross sectional view of the superalloy articles with machined faying surfaces;
FIGURE 3 is a schematic cross sectional view of the superalloy articles in a mated orientation; and
FIGURE 4 is a schematic cross sectional view of the superalloy articles after a welding operation.

### DETAILED DESCRIPTION OF THE INVENTION

Superalloys are useful in applications that require good strength, creep resistance, fracture toughness, and other mechanical properties at elevated temperatures. Superalloys, or high-performance alloys, are alloys with superior mechanical strength, good surface stability, corrosion resistance, and have the ability to withstand high temperatures without oxidizing or losing mechanical properties. Typical applications are in aerospace industry, e.g. for turbine blades for jet engines.

Superalloys are typically based on nickel, cobalt, or iron. Many other elements, both common and exotic, can be present; chromium, molybdenum, tungsten, aluminum, zirconium, niobium, rhenium, carbon or silicon are just a few examples.

Single-crystal superalloys (SC superalloys) are designed to have some strength even when formed as a single crystal, so there are no grain boundaries in the material. The mechanical properties of most other alloys depend on the presence of grain boundaries, but at high temperatures they would participate in creep and must be replaced by other mechanisms. In many such alloys, islands of an ordered intermetallic phase sit in a matrix of disordered phase, all with the same crystalline lattice. This approximates the dislocation-pinning behavior of grain boundaries, without introducing any amorphous solid into the structure.

The method of welding pursuant to this disclosure is useful with a wide variety of parts and components fabricated from superalloys. While the following discussion of the method of welding superalloy articles will be with reference to articles formed from gamma prime strengthened nickel base superalloys, it should be understood that the method of welding is applicable to welding articles formed from all types of superalloys.

Gamma prime strengthened nickel base superalloys, which for example, in one embodiment contain relatively high (i.e. combined weight percent greater than 3%) aluminum and titanium content, demonstrate added strength over non-gamma prime strengthened nickel base superalloys, but are known to be difficult to weld without the occurrence of cracks developing in the weld joint.

Cracking that develops in the weld joint generally results from the solidification, cooling, and the strains that develop due to weld shrinkage or heat treatment. Further, if the contraction of the superalloy is restricted (i.e. by fixturing, tooling, etc.), the shrinkage strains may induce residual stresses that also produce cracking. It would be advantageous to increase the ductility of the material in the region to be welded in order to minimize and/or prevent the effects of weld shrinkage. Ductility is the ability of a material to plastically flow before fracturing. Fracture characteristics are generally described in terms of the ability of the material to undergo elastic stretching and plastic deformation in the presence of stress. Ductile alloys provide greater ability to deform plastically and to redistribute load, thereby decreasing the occurrence of cracking. Therefore, welding a more ductile alloy to a gamma prime strengthened nickel base superalloy reduces residual stresses in the superalloy. The ductile alloy absorbs the stress, and thus minimizes cracking, when compared to welding two gamma prime strengthened nickel base superalloys together. The method disclosed herein allows for the welding of nickel base superalloys without inducing high stresses, and thus reducing the formation of cracks within the weld region.

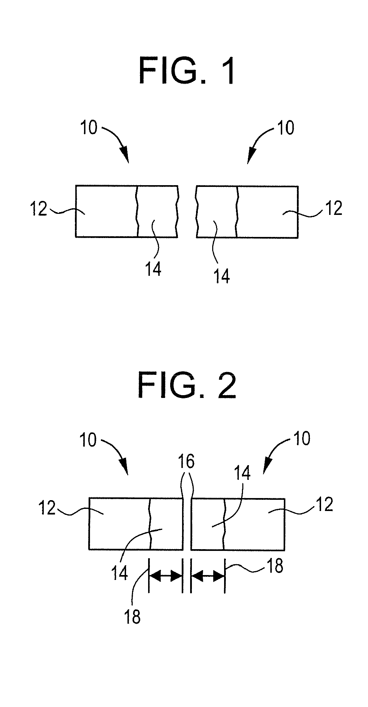

Figure 1 illustrates two articles 10 to be joined, wherein each of the articles 10 is formed from a gamma prime strengthened nickel base superalloy 12. Each of the articles 10 further comprises a thick buttered layer 14 attached (i.e. metallurgically joined, mechanically bonded, welded, thermally sprayed) at opposing ends of each of the articles 10, having greater ductility than the base alloy 12. The buttered layers 14 may be formed from nickel, cobalt, or iron based, solid solution or low gamma prime alloys, such as alloy 625, Waspaloy, A-286 or Ultimet for example. Each of the articles 10 is individually heat treated in order to relieve residual stresses resulting from the attachment of the buttered layer 14 to the gamma prime strengthened nickel base superalloy. This individual heat treat operation allows for stress relieving of the gamma prime strengthened nickel base superalloy 12 base material without cracking due to the greater ductility of the buttered layers 14 acting as free surfaces.

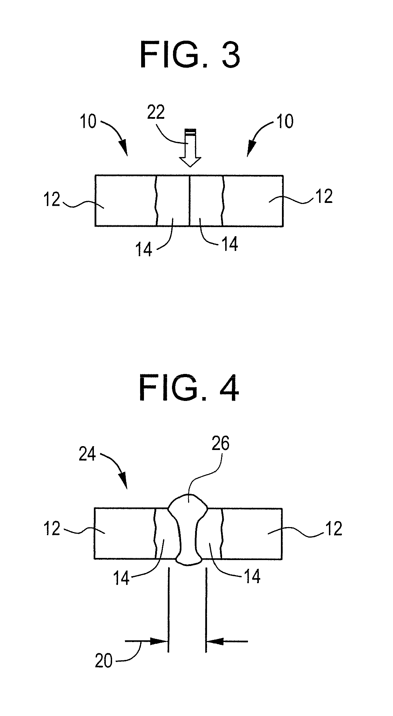

Following the individual heat-treat operations, the buttered layers 14 of the articles 10 are machined to establish matching faying surfaces 16 as illustrated in Fig. 2. A faying surface is defined as a mating surface of an article that is in contact with, or in close proximity to, another member to which it is to be joined. The buttered layer 14 may be machined by conventional methods, such as, for example, grinding, milling, etc. Each of the buttered layers 14 has a suitable thickness 18 capable of containing the weld zone and heat affected zone 20 (as shown in Fig. 4) of the subsequent welding operation between the articles 10.

Figure 3 illustrates the faying surfaces 16 mated to each other in preparation for the welding operation. The welding operation may be, for example in one embodiment, a fusion weld operation 22, such as TIG, plasma, electron beam or laser, or a solid state joining welding operation, such as friction stir, resistance, or diffusion. The welding operation between the two buttered layers 14 allows for better welding characteristics, including resistance to cracking.

Figure 4 illustrates a welded assembly 24 after the joining operation. The shrinkage stresses resulting from the joining operation affect the weld zone 26 and heat-affected zone 20 of the weld, and are contained entirely within the buttered layers 14. This allows for the majority of the stresses induced to occur in the buttered layer 14 with very little to no stresses (i.e. thermal, shrinkage, etc.) induced in the gamma prime strengthened nickel base superalloy 12 material. In addition, the stress induced during subsequent thermal operations, such as heat treatment, should not deleteriously affect the gamma prime strengthened superalloy 12.

The disclosed method further allows for the welding of thick sections of material, due to the prevention of induced stresses in the gamma prime strengthened nickel base superalloy 12 material. The method further accommodates geometries which may result in shrinkage stress interactions between multiple welds by separately heat treating articles prior to the buttered layer-to-buttered layer weld.

The disclosed method provides an improved welding interface between nickel base superalloys with the elimination of crack formation and reduced residual stresses at the welding joint thus promoting increased fatigue life and therefore greater life expectancy of the overall assembly/component.

While the invention has been described with reference to a preferred embodiment or embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the claims.

## Claims

1. A method of welding superalloy articles, the method comprising:
attaching a buttered layer to a first article formed from a superalloy;
attaching a buttered layer to a second article formed from a superalloy;
relieving residual stresses between the buttered layer and the superalloy;
establishing matching faying surfaces at the buttered layers of the articles; and,
welding the faying surfaces of the articles together to form a welded assembly, wherein after welding, a heat affected zone is within the buttered layers.

2. The method of claim 1 wherein the attaching of the buttered layer to the superalloy further comprises:
attaching the buttered layer to a nickel base superalloy; or
attaching of the buttered layer to the nickel base superalloy further comprises attaching the buttered layer to a gamma prime strengthened nickel base superalloy; or
attaching of the buttered layer to the gamma prime strengthened nickel base superalloy further comprises attaching the buttered layer to a gamma prime strengthened nickel base superalloy containing aluminum and/or titanium.

3. The method of claim 1 further comprising machining to dimensions capable of surrounding the heat affected zone.

4. The method of claim 1 further comprising cooling the welded assembly, wherein after cooling, the welded assembly is essentially free of cracks.

5. The method of claim 1 wherein the relieving of the residual stresses further comprises performing a heat-treat operation on each of the articles.

6. The method of claim 1 wherein the establishing of the faying surfaces further includes performing a machining operation on the buttered layers of the articles.

7. A method of welding superalloy articles, the method comprising:
attaching a buttered layer to a first article formed from a superalloy;
attaching a buttered layer to a second article formed from a superalloy;
relieving residual stresses between the buttered layer and the superalloy;
establishing matching faying surfaces at the buttered layers of the articles; and,
welding the faying surfaces of the articles together to form a welded assembly, wherein after welding, the superalloy is free of induced stresses.

8. The method of claim 7 wherein the attaching of the buttered layer to the superalloy further comprises attaching the buttered layer to a nickel base superalloy; or
attaching the buttered layer to a gamma prime strengthened nickel base super alloy containing aluminum and/or titanium.

9. The method of claim 7 further comprising cooling the welded assembly, wherein after cooling, the welded assembly is essentially free of cracks and the relieving of the residual stresses further comprises performing a heat-treat operation on each of the articles.

10. The method of claim 7 wherein the establishing of the faying surfaces further includes performing a machining operation on the buttered layers of the articles.
